# EUROPEAN PATENT APPLICATION

(11) **EP 1 499 132 A2**
(43) Date of publication of application: **19.01.2005**
(21) Application number: 04016851.0
(22) Date of filing: 16.07.2004
(51) Int. Cl.: H04N 7/26

(54) **Signal processing apparatus and control method therefor, program and recording medium**

(30) Priority: 18.07.2003 JP 2003277075; 08.07.2004 JP 2004202347
(71) Applicant: CANON KABUSHIKI KAISHA, Ohta-ku, Tokyo (JP)
(72) Inventor: Yoshigahara, Noriyuki, Ohta-ku, Tokyo (JP)
(74) Representative: Weser, Wolfgang, Dr. Dipl.-Phys.

(57) **Abstract**

A signal processing apparatus comprising: a plurality of signal processing circuits; and a storage circuit stored with the program which causes the plural signal processing circuits to execute a plurality of signal processings including a pixel number conversion processing of image data in an assigned manner and which can select it according to the enlargement ratio of the pixel number conversion processing which of the plural signal processing circuits is caused to execute a partial signal processing of the plural signal processings.

## Description

### BACKGROUND OF THE INVENTION

### Field of the Invention

This invention relates to a signal processing apparatus and a control method for the apparatus, and a program and a recording medium. More particularly, the invention is suited when applied to a technique for assigning and executing a signal processing such as a signal decoding processing to and by at least two processors.

### Description of the Related Art

A built-in system is frequently designed such that a series of processings are carried out in a pipeline manner by using a plurality of processors, which are provided with hardware architectures and instructions suitable for a specific function. Even if each processor is a multi-task or multi-thread mechanism for a plurality of different processings, on the other hand, few transversal scheduling mechanisms are provided between the plural processors at the task or thread unit while taking the cost aspect into consideration.

In the system of the related art, in which the processings are carried out in the pipeline method using such multi-task and the plural processors, the decoding processing of moving image coded data is carried out in the following manner. Here, a decoding processing to be applied to the MPEG2 moving image compressing method will be described as a conventional example.

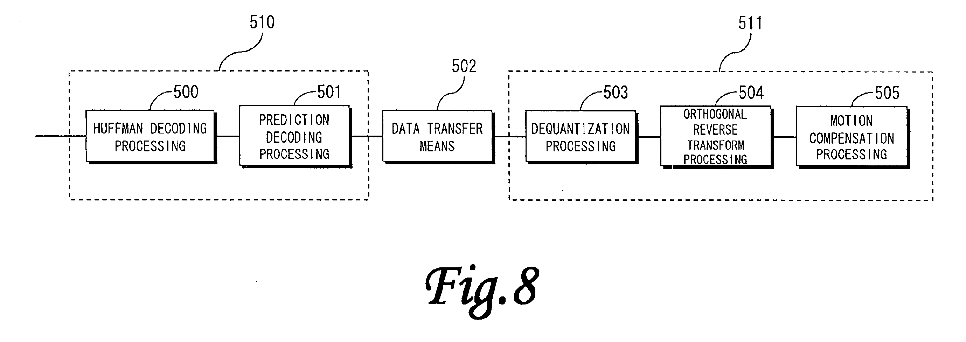

Fig. 8 shows one configuration example of a decoding processing apparatus of the prior art. First of all, in a processor 510 suited for a variable length decoding processing, a Huffman decoding means 500 decodes coded data inputted for each macro block, and prediction decoding means 501 executes a prediction decoding processing for DC components and motion vectors. Data transfer means 502 transfers the data for each macro block from the processor 510 to a processor 511, which is suited for the general image processing.

In the processor 511 suited for the general image processing, the data are subjected to a dequantization processing 503, a orthogonal reverse processing 504 and a motion compensation processing 505, and the final data are outputted.

There is generally known a method for performing an enlarging/reducing processing simultaneously with the decoding processing. In this enlarging/reducing processing, an image of satisfactory quality can be obtained, if the decoding processing executes the orthogonal reverse transform, by thinning or adding a coefficient in a frequency region to execute the orthogonal reverse transform in a desired size into the space region. The processing quantity can be more spared than that of the case, in which a resolution conversion is performed after the decoding.

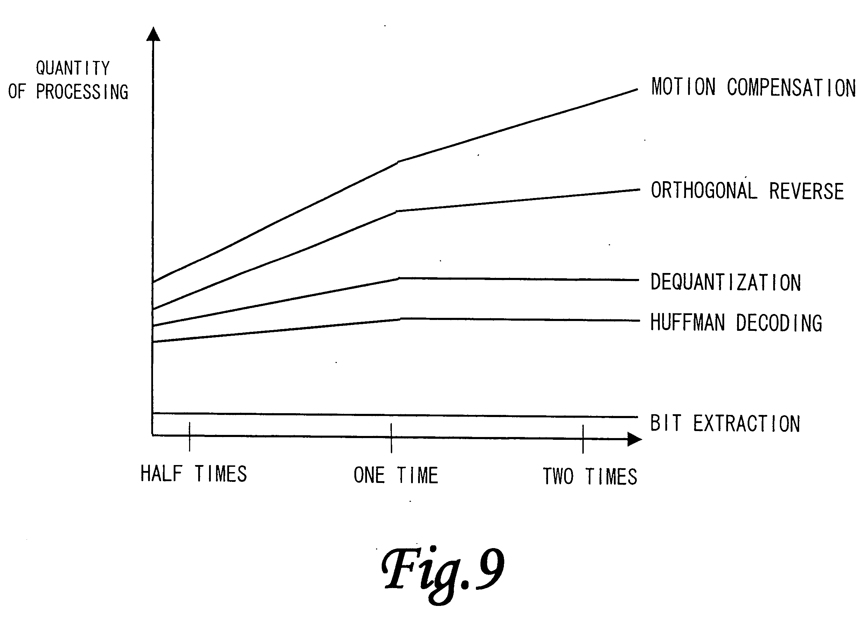

However, the aforementioned enlarging/reducing processing at the decoding time is applied to the decoding processing apparatus shown in Fig. 8. Then, the Huffman decoding processing at the preceding stage of the decoding processing is substantially constant independently of the enlargement ratio, as shown in Fig. 9, but the orthogonal reverse processing or the motion compensation processing at the succeeding step of the decoding processing varies according to the enlargement ratio. Specifically, the processing of the processor 510 for executing the preceding stage of the decoding processing is increased at the reducing processing time, and the processing of the processor 511 for executing the succeeding stage of the decoding processing is increased at the enlarging processing time, so that the balance of the processing load is deteriorated to lower the total processing efficiency.

### SUMMARY OF THE INVENTION

An object of the invention is to provide a signal processing apparatus and a control method for the apparatus, and a program and a recording medium, which can improve a balance in a processing load among a plurality of processors, and/or can reduce the maximum processing abilities needed for the individual processors.

According to a first aspect of the invention, there is provided a signal processing apparatus comprising: a plurality of signal processing circuits; and a storage circuit stored with the program which causes the plural signal processing circuits to execute a plurality of signal processings including a pixel number conversion processing of image data in an assigned manner and which can select it according to the enlargement ratio of the pixel number conversion processing which of the plural signal processing circuits is caused to execute a partial signal processing of the plural signal processings.

Here, the storage circuit for storing the program can also be configured of a plurality of storage circuits (which will be individually called the "sub storage circuits") such as a first storage circuit and a second storage circuit. In this case, it is assumed that the program is configured of programs stored in the individual sub storage circuits. Moreover, the storage circuits or the sub storage circuits can also be integrated over the same semiconductor substrate as that of the signal processing circuit. The storage circuits or the sub storage circuits can also be disposed in a common sealing package. In case the storage circuits are configured of a plurality of sub storage circuits, moreover, some of sub storage circuits can configure an integrated circuit together with the signal processing circuit, and the remaining sub storage circuits can be arranged as those which are not integrated with the plural signal processing circuits.

Here, the enlargement ratio of the image number conversion processing can be determined, for example, as the ratio of the pixel number before the pixel number conversion to the pixel number after the pixel number conversion. This ratio may be 1 or less. In this case, the pixel number after the pixel number conversion is less than that before the conversion. Here, the selectivity according to the enlargement ratio should not be restricted to the configuration, in which the selection can be made according to the value given as the ratio. For example, it is possible to adopt the configuration which designates, at the conversion processing for the number of pixels, not the value itself of the ratio but the number of pixels to be decreased by a thinning processing or increased by an interpolation processing (that is, the number of frequency components to be thinned or interpolated in case those processings are performed in the frequency region). The configuration to be selected according to some condition of the case, in which the pixel number of an image varies as a result of the signal processing based on that condition, covers the expression that the selection can be made according to the enlargement ratio.

Moreover, the aforementioned partial signal processing can properly adopt the configuration of the signal processing to be performed for the enlarging processing of the image data. Here, the partial signal processing of the plural signal processings may be either the case of one signal processing in the plural signal processings or a plurality of signal processings of the plural signal processings. In other words, the signal processing to be selected for determining what signal processing circuit it is executed may be singular or plural.

Moreover, the plural signal processings can properly adopt the configuration of a plurality of signal processings, in which the expanding processing of the image data is executed by executing the plural signal processings consecutively. Here, the plural signal processings to be sequentially executed are configured of a certain signal processing and a signal processing to be executed on the signal (including the signals as a result that other signal processings were further performed) obtained as a result of the signal processing after that signal processing (wherein the phrase "after that signal processing" includes not only just after that signal processing but also after another signal processing not contained in the plural signal processings).

Moreover, the aforementioned signal processing apparatus can adopt the configuration, wherein the plural signal processing circuits include: a first signal processing circuit; and a second signal processing circuit for executing another of the plural signal processings on a signal which is obtained as a result that the signal processing is executed in the first signal processing circuit, and wherein the program can cause the partial signal processing to be executed in the first signal processing circuit, in case the enlargement ratio is larger than a predetermined value, and in the second signal processing circuit, in case the enlargement ratio is smaller than the predetermined value.

Here, the signal obtained as a result that the signal processing was executed in the first signal processing circuit does not imply only the signal just after outputted from the first signal processing circuit. That obtained signal also covers the signal, which is obtained as a result that another processing was performed on the signal obtained as a result that the signal processing was executed in the first signal processing circuit.

Moreover, it is possible to properly adopt the configuration, wherein the plural signal processing circuits include: a first signal processing circuit; and a second signal processing circuit for executing another of the plural signal processings on a signal which is obtained as a result that the signal processing was executed in the first signal processing circuit, and wherein the program can cause: the first signal processing and the second signal processing to be executed in the first signal processing circuit, in case the enlargement ratio is larger than but not a predetermined value, and in the second signal processing circuit, in case the enlargement ratio is smaller than but not the predetermined value; and the first signal processing in the first signal processing circuit and the second signal processing in the second signal processing circuit, in case the enlargement ratio takes a value equal to the predetermined value.

Moreover, it is possible to properly adopt the configuration, wherein the plural signal processing circuits include: a first signal processing circuit; and a second signal processing circuit for executing another of the plural signal processings on a signal which is obtained as a result that the signal processing was executed in the first signal processing circuit, and wherein the program can cause: the first signal processing and the second signal processing to be executed in the first signal processing circuit, in case the enlargement ratio is larger than a predetermined value, and in the second signal processing circuit, in case the enlargement ratio is smaller than another predetermined value smaller than the predetermined value; and the first signal processing in the first signal processing circuit and the second signal processing in the second signal processing circuit, in case the enlargement ratio takes a value between the predetermined value and the another predetermined value.

Moreover, it is possible to properly adopt the configuration, wherein the plural signal processing circuits include: a first signal processing circuit; and a second signal processing circuit for executing another of the plural signal processings on a signal which is obtained as a result that the signal processing was executed in the first signal processing circuit, and wherein the program can select it according to the enlargement ratio of the pixel number conversion processing whether or not the processing for setting the information to restrict a signal to be processed in the second signal processing circuit is to be executed.

According to another aspect of the invention, there is provided a signal processing apparatus comprising: a first signal processing circuit; a second signal processing circuit for executing another signal processing on a signal which is obtained as a result that the signal processing was executed in the first signal processing circuit; and a storage circuit for a program which causes the first and second signal processing circuits to execute a plurality of signal processings including an image data pixel number conversion processing in an assigned manner, wherein the program can select it according to the enlargement ratio of the pixel number conversion processing whether or not the processing for setting the information to restrict a signal to be processed in the second signal processing circuit is to be executed.

According to still another aspect of the invention, there is provided a signal processing method for image data comprising: the step of setting it according to the enlargement ratio of the pixel number conversion processing which of a plurality of signal processing circuits is used for executing a partial signal processing among a plurality of signal processings including an image data pixel number conversion processing; and the step of assigning and executing the plural signal processings to and by the plural signal processing circuits, wherein the partial signal processing is executed by the signal processing circuit set at the setting step.

According to still another aspect of the invention, there is provided a signal processing method for performing a pixel number conversion processing of image data, comprising:
the step of performing a predetermined signal processing in a first signal processing circuit; and
the step of processing such a signal in a second signal processing circuit as is obtained as a result that a signal processing was executed in the first signal processing circuit,
wherein it is selected according to the enlargement ratio of the pixel number conversion processing whether or not the predetermined signal processing includes a setting processing for setting the information to restrict a signal to be processed in the second signal processing circuit.

According to a further aspect of the invention, there is provided a program for signal processing image data, wherein it is configured to cause a plurality of signal processing circuits to execute a plurality of signal processings including a pixel number conversion processing of the image data in an assigned manner, and wherein it is configured to select which of the plural signal processing circuits is used for executing a partial signal processing of the plural signal processings.

According to a further aspect of the invention, there is provided a program for performing a pixel number conversion processing of image data, wherein it is configured to cause a first signal processing circuit to execute a predetermined signal processing, and to cause a second signal processing circuit to process the signal which is obtained as a result that the signal processing was executed in the first signal processing circuit, and wherein it is configured to select it according to the enlargement ratio of the pixel number conversion processing whether or not the predetermined signal processing includes a setting processing for setting the information to restrict the signal to be processed in the second signal processing circuit.

### BRIEF DESCRIPTION OF THE DRAWINGS

Fig. 1 is a block diagram showing a configuration of a decoding processing apparatus according to a first embodiment of the invention;
Fig. 2 is a diagram enumerating conditions for switching processing actions by switching means according to the first embodiment of the invention;
Fig. 3 is a graph illustrating balances of processing loads in the decoding processing apparatus according to the first embodiment of the invention;
Fig. 4 is a block diagram showing a configuration of a decoding processing apparatus according to a second embodiment of the invention;
Fig. 5 is a diagram enumerating conditions for switching processing actions by switching means according to the second embodiment of the invention;
Fig. 6 is a diagram showing a configuration of a decoding processing apparatus as an example of comparison;
Fig. 7A is a graph illustrating relations between the processing quantity and an enlargement ratio in the comparison example;
Fig. 7B is a graph illustrating balances of processing loads in the comparison example;
Fig. 8 is a block diagram showing one configuration example of the decoding processing apparatus of the prior art; and
Fig. 9 is a graph illustrating relations between the processing quantity and an enlargement ratio in the example of the prior art.

### DESCRIPTION OF THE PREFERRED EMBODIMENTS

Embodiments of the invention will be described with reference to the accompanying drawings.

### [First Embodiment]

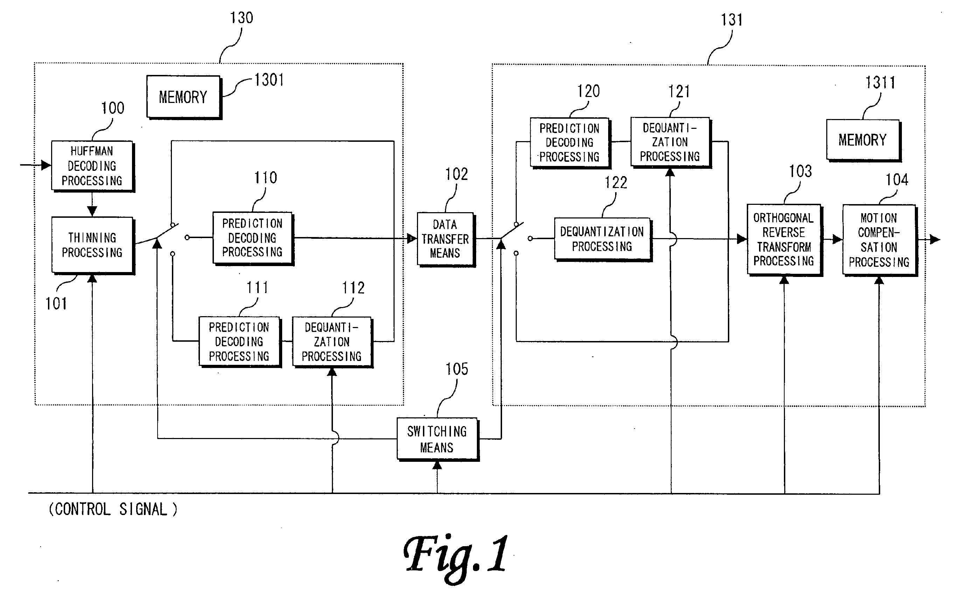

First of all, a first embodiment of the invention will be described in the following. Fig. 1 shows a configuration of a process in a decoding processing apparatus according to a first embodiment of the invention.

In this embodiment, a Huffman decoding processing, a thinning processing, a prediction decoding processing, a dequantization processing, a orthogonal reverse processing and a motion compensation processing are carried out as a plurality of signal processing operations to be consecutively executed for expanding image data. The image data to be inputted are the signals, which have been converted into frequency range signals. Here, the configuration is especially made to input the image data, which have been compressed according to the MPEG2.

This first embodiment uses a first processor 130 and a second processor 131 as two signal processing circuits for configuring a plurality of signal processing circuits. These processors are packaged individually of each other. Moreover, the configuration is made such that the signal obtained as a result the signal processing in the first processor 130 is further subjected to another signal processing. In the configuration, moreover, the signal outputted from the first processor 130 is inputted to the second processor 131 through data transfer means 102 configured of a data bus or a signal route. Here in this first embodiment, there is adopted a configuration, in which the data transfer means is further provided with a memory. After the signal outputted from the first processor 130 was once stored in the memory, it is read out at a necessary timing and is fed to the second processor 131.

Here, the first processor 130 to be used is more proper for the Huffman decoding processing than the second processor 131. Moreover, the second processor 131 is more proper for the orthogonal reverse processing and/or the motion compensation processing than the first processor 130.

Fig. 1 shows a configuration concept of the first processor 130, the second processor 131 and the data transfer means 102 in the first embodiment. Fig. 1 is also a diagram showing the flows of the signal processings to be executed in the individual processors.

Storage circuits for storing programs in the first embodiment are a sub-storage circuit such as a memory 1301 and a sub-storage circuit such as a memory 1311. The memory 1301 is disposed in the first processor, and the memory 1311 is disposed in the second processor 131.

These memories 1301 and 1311 are stored with the programs for executing the following signal processings. A signal for designating the enlargement ratio is fed to each processor so that the signal processing flows to be described hereinafter are realized by causing the individual processors to perform the actions according to the programs on the basis of that signal. Here, the memories need not be disposed in the packages of the individual processors but can be disposed outside of the packages. Moreover, the memories for individually storing the programs need not be arranged to correspond to the individual processors, but one memory can be stored with the programs for controlling the individual processors. Incidentally, the programs here mean those specify what is to be performed by the processors as the signal processing circuits.

In the variable length decoding processor 130 suitable for variable length decoding processings, as shown in Fig. 1, code data inputted are subjected for the individual macro blocks to a Huffman decoding processing 100 and are further subjected, in case the enlargement ratio control signal from the outside is a reducing one, to a thinning processing 101 so that they are converted into a desired size.

After this, the processings are switched at switching means 105 with the enlargement ratio control signal coming from the outside, into the following three ones. Specifically, these switching processings are the results of the processings according to the programs. In order to make the flows of the individual processings understandable, Fig. 1 shows such virtual switches schematically in the block diagrams of the individual processors as can be switched according to the switching means 105.

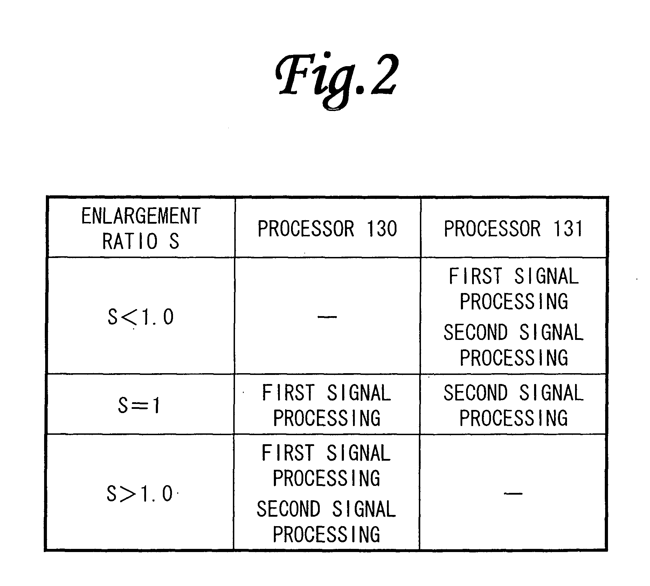

In this embodiment, the assignments of the signal processings to be executed by the individual processors are made different among the cases, in which the image is to be enlarged, reduced, and neither enlarged nor reduced. Here, the individual cases are so defined that the ratio S of pixels before and after the pixel number conversion processing is defined as the enlargement ratio S. The selected states according to the enlargement ratio S of the processings to be executed in the individual processors are tabulated in Fig. 2. Here, it is separately set, for the cases of the enlargement ratios more and less than a predetermined value of 1 and the enlargement ratio of 1, which processor is caused to execute the two signal processings: a first processing or a prediction decoding processing and a second signal processing or a dequantization processing. Alternatively, it is arbitrary to adopt 1.1 as one predetermined value and 0.9 as the other predetermined value. Then, it is possible to select, for the cases of the enlargement ratios more than 1.1, between 1.1 and 0.9, and less than 0.9, which processor is caused to execute the two signal processings.

In this case, it is possible to suitably set which of the upper and lower ranges the case, in which the one predetermined value or the other predetermined value and the enlargement ratio S are equal, is contained in. In other words, the phrases the "case in which the enlargement ratio is larger than a certain value" and the "case in which the enlargement ratio is smaller than a certain value", as such, do not specify the cases in which the enlargement ratio belongs to the larger range and the lower range of a certain value.

In this embodiment, as shown in Fig. 2, in case the data having been subjected to the Huffman decoding processing (as will be called the "input data") are subjected to the reducing conversion processing according to the enlargement ratio control signal coming from the outside, the input data are fed as they are to the data transfer means 102.

In case the input data are subjected to a one-time conversion processing, the input data are subjected to a prediction decoding processing 110 as a first signal processing for DC components and motion vectors and are then fed to the data transfer means 102.

In case the input data are subjected to the enlargement conversion processing, on the other hand, the input data are subjected to a prediction decoding processing 111 as the first signal processing for the DC components and the motion vectors. In response to the enlargement ratio control signal from the outside, the input data are subsequently subjected to a desired dequantization processing as the second signal processing according to the enlargement ratio control signal from the outside and are then fed to the data transfer means 102. In this case, an interpolation processing necessary for the enlargement conversion processing is also executed in the prediction decoding processing 111. This interpolation processing can also be executed in the dequantization processing 112.

After any of the processings was executed, the transfer of the data is executed for individual macro blocks by the data transfer means 102 from the variable length decoding processor 130 as the first information processing means to the image processing processor 131 as the second information processing means suited for the general image processing. In the image processing processor 131 suited for the image processing, the following processings are switched in the switching means 105 with the enlargement ratio control signal coming from the outside.

At first, in case the input data are to be subjected to the reducing conversion processing, they are subjected to a prediction decoding processing 120 as the first signal processing for the DC component and the motion vector. Subsequently, the input data are subjected to a desired dequantization processing 121 as the second signal processing with the enlargement ratio control signal from the outside according to the enlargement ratio, and the processing transfers to a orthogonal reverse transform processing 103.

In case the input data are to be subjected to the one-time conversion processing, on the other hand, they are subjected to a dequantization processing 122 as the second signal processing, and the processing transfers to the orthogonal reverse transform processing 103.

In case the input data are to be subjected to the enlargement conversion processing, on the other hand, no processing is executed on the input data, but the processing transfers as it is to the orthogonal reverse transform processing 103.

After any of the aforementioned reducing conversion processing, the one-time conversion processing and the enlargement conversion processing was executed, the input data are subjected to the orthogonal reverse transform processing 103 according to the enlargement ratio with the enlargement ratio control signal from the outside.

After this, a motion compensation processing 104 is executed according to the enlargement ratio with the enlargement ratio control signal from the outside.

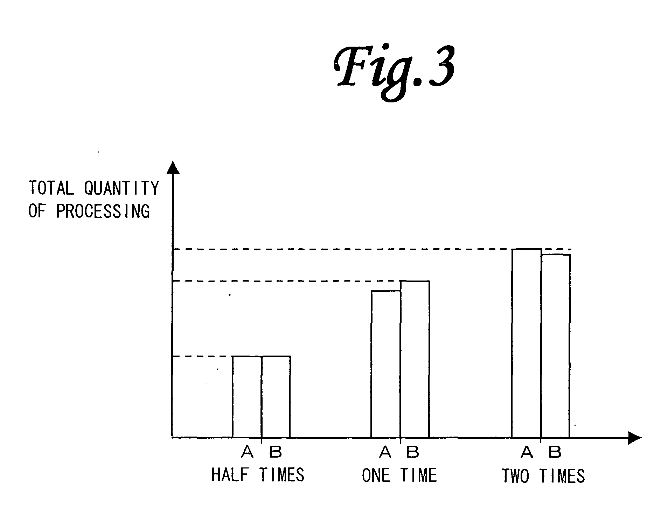

In this first embodiment, as has been described hereinbefore, the assignments of the processings to be borne by the individual processors are changed according to the enlargement ratio. The signal processings to be executed by the individual processors can be distributed, as shown in Fig. 3, so that the loads to be borne on the variable length decoding processor 130 (as shown at A in Fig. 3) and the image processing processor 131 (as shown at B in Fig. 3) can be substantially equalized to each other independently of the enlargement ratio. As a result, it is possible to reduce the maximum processing ability that is demanded for each of the plural processors. Moreover, it is possible to improve the total processing efficiency in the image processing using the plural processors.

### [Second Embodiment]

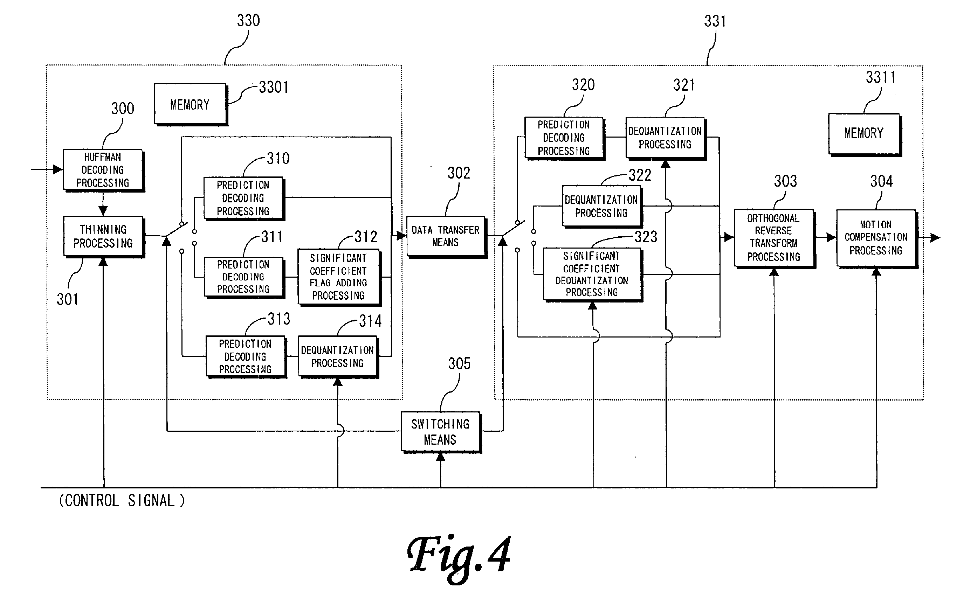

Next, a second embodiment of the invention will be described in the following. Fig. 4 shows a process configuration of a signal processing apparatus according to the second embodiment. Like the first embodiment, this embodiment uses two processors 330 and 331 as the two signal processing circuits. These individual processors perform the signal processings according to programs stored in memories 3301 and 3311.

In the first embodiment, the assignment of the signal processings to the two processors is divided into three cases according to the enlargement ratios. In this embodiment, the assignment is divided into four cases. Specifically, it is made possible to select it, as the processing flow of the case of increasing the pixel number, whether or not the processing for setting the information to restrict the signal to be processed at the processor at the succeeding stage is performed in the processor at the preceding stage. In case that setting processing was performed in the processor at the preceding stage, the processor at the succeeding stage can perform the necessary processing exclusively on a specific signal in accordance with the set information.

The configuration of this embodiment will be described in detail in the following.

In this second embodiment, as shown in Fig. 4, the variable length decoding processor 330 suited as the first signal processing means for the variable length decoding processing subjects the code data inputted, to a Huffman decoding processing 300 for each macro block. After this, in case the enlargement ratio control signal from the outside is reduced in a thinning processing 301, the input data are subjected to the coefficient thinning processing so that they are converted into a desired size.

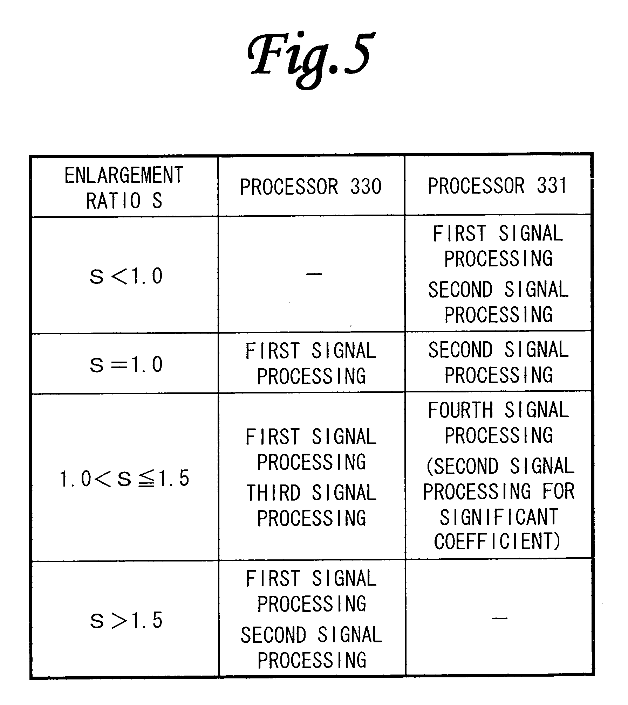

After this, the processings are switched at switching means 305 with the enlargement ratio control signal coming from the outside, into the following four ones. According to the enlargement ratio S, the processings are switched by the switching means corresponding to the individual conditions. The selected states of the processings to be executed in the individual processors 330 and 331 are shown in Fig. 5.

In case the reducing conversion processing is executed on the data (or the input data) having been subjected to the Huffman decoding treatment, in accordance with the enlargement ratio control signal coming from the outside, as shown in Fig. 5, the input data are fed to data transfer means 302 without being subjected to the signal processing. The configuration of the data transfer means 302 is identical to that of the data transfer means 102 used in the first embodiment.

In case the input data are subjected to the one-type conversion processing, on the other hand, a prediction decoding processing 310 is executed as a first signal processing for DC components and motion vectors. After this, the input data are fed to the data transfer means 302.

In case an enlargement conversion processing of an enlargement ratio S more than one time and a predetermined number of multiplication such as 1. 5 or less (1 < S ≤ 1.5) is to be executed on the input data, on the other hand, a prediction decoding processing 311 is executed as the first signal processing on the DC components and the motion vectors. Subsequently, the input data are subjected to a significant coefficient flag adding processing 312 as a third signal processing with the enlargement ratio control signal from the outside, so that a flag is set for a significant coefficient in the input data. Here in the significant coefficient flag adding processing 312, the flag is set for the significant coefficient in the data, which have been subjected to the Huffman decoding processing 300 and the prediction decoding processing 311. After this, the input data are fed to the data transfer means 302. Here in the prediction decoding processing 311, an interpolation processing necessary for the enlargement conversion processing is executed together.

In case an enlargement conversion processing of an enlargement ratio S more than 1.5 times (1.5 < S) is to be executed on the input data, on the other hand, a prediction decoding processing 313 is executed as the first signal processing on the DC components and the motion vectors. Subsequently, the input data are subjected to a desired dequantization processing 314 according to the enlargement ratio, as a second signal processing with the enlargement ratio control signal from the outside, and are then fed to the data transfer means 302.

Here, if data is subjected to the enlargement conversion processing, in the prediction decoding processing 313, an interpolation processing necessary for the enlargement conversion processing is executed together. This interpolation processing can also be executed in the dequantization processing 314.

After this, the data are fed for each micro block to the image processing processor 331 as second information processing means. In this image processing processor 331 suited for the general image processing, the processings are switched into the following four ones by the switching means 305, as shown in Fig. 5, in accordance with the enlargement ratio control signal from the outside.

Specifically, in case the input data are to be subjected to the reducing conversion processing, they are subjected to a prediction decoding processing 320 as a first signal processing on the DC components and the motion vectors. After this, the input data are subjected to a desired dequantization processing 321 according to the enlargement ratio with the enlargement ratio control signal from the output, and the processing transfers to a orthogonal reverse transform processing 303.

In case the input data are to be subjected to the one-time conversion processing, on the other hand, the input data are subjected as they are to a dequantization processing 322, and the processing transfers to the orthogonal reverse processing 303.

In case an enlargement conversion processing of an enlargement ratio S more than one time and a predetermined number of multiplication such as 1.5 or less (1 < S ≤ 1.5) is to be executed on the input data, on the other hand, a second signal processing on a significant coefficient as a fourth signal processing, that is, a significant coefficient dequantization processing 323 is executed on the input data according to the enlargement ratio control signal from the outside, only for the significant coefficient, to which the flag was added by the aforementioned significant coefficient flag adding processing 312, and the processing then transfers to the orthogonal reverse processing 303. In the processing case of increasing the pixel number, the processing load on the processor at the downstream stage increases as the pixel number increases. Here in accordance with the execution of the interpolation processing for enlarging the pixel number in the first processor 330, however, the processing for setting the information to restrict the signal processing object in the second processor 331 as the processor at the downstream stage, that is, the processing for adding the significant flag is executed in the first processor 330 as the processor at the preceding stage, so that the increase in the load on the processor 331 at the downstream stage can be suppressed although the processing for increasing the pixel number is performed. Specifically, the significant coefficient flag (i.e., the information indicating which the significant frequency component is, because this embodiment handles the signal of the frequency region (i.e., the signal group composed of the coefficients of individual frequency components)), as set by the processor 330 at the preceding stage is referred to by the second processor 331, so that the processing in the second processor 331 on the insignificant signal can be reduced. Here, the information for restricting the signal processing object may be either the information for indicating that a specific signal is significant or the information for indicating that a specific signal is insignificant.

In case an enlargement conversion processing of an enlargement ratio more than a predetermined number of multiplication more than 1.5 times (1.5 ≤ S) has been executed on the input data, on the other hand, the input data are not subjected to any processing but are fed to the orthogonal reverse processing 303.

After any of the foregoing four processings was executed on the input data, the processing transfers to the orthogonal reverse processing 303. The orthogonal reverse processing 303 according to the enlargement ratio is executed on the input data with the enlargement ratio control signal from the outside. After this, the input data are subjected to a motion compensation processing 304 according to the enlargement ratio with the enlargement ratio control signal from the outside, and produce a final output.

In this second embodiment, as has been described hereinbefore, the processings to be borne by the individual processors are changed according to the enlargement ratio thereby to distribute the signal processings to be executed by the individual processors. Independently of the enlargement ratio, therefore, it is possible to substantially equalize the loads to be borne by the processings of the variable length decoding processor 330 and the image processing processor 331. It is, therefore, possible to reduce the maximum processing ability demanded for each of the plural processors and to improve the total processing efficiency in the image processing using the plural processors.

In the case of the signal processing for increasing the pixel number, on the other hand, the signal processing for setting the information to restrict the object of the signal processing to be performed the processor at the succeeding processing is executed by the processor at the preceding step. It is, therefore, possible to execute a processing of high adaptability and to improve the balance of the processing loads between the individual processors.

### [Comparison Example]

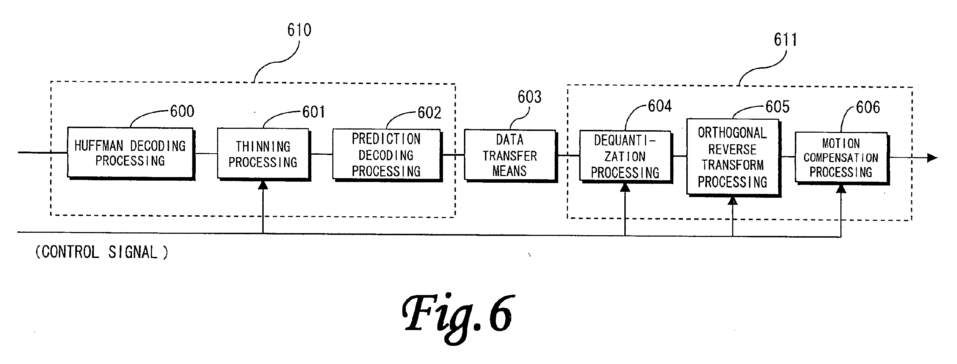

Next, an example of comparison for the decoding processing apparatus according to the second embodiment will be described in the following. The configuration of this comparison example is shown in Fig. 6.

First of all, the code data inputted are subjected for each macro block to a Huffman decoding processing 600 in a processor 610 suited for the variable length decoding processing, as shown in Fig. 6. In case the enlargement ratio control signal is reducing, a coefficient thinning processing 601 is then executed so that the input data are converted to a desired size.

Next, a prediction decoding processing 602 is executed on the DC components and the motion vectors, and the data are fed for each macro block by data transfer means 603 from the processor 610 to a processor 611 suited for the general image processing.

In the processor 611 suited for the general image processing, a dequantization processing 604 according to the enlargement ratio is executed with the enlargement ratio control signal from the outside. Subsequently, the input data are subjected to a orthogonal reverse processing 605 according to the enlargement ratio on the basis of the enlargement ratio control signal from the outside. In response to the enlargement ratio based on the enlargement ratio control signal from the outside, moreover, a motion compensation processing 606 is executed on the input data to produce a final output.

In case the processors of the decoding processing apparatus according to the comparison example are thus configured, they have the functions for the enlarging and reducing processings so that the processings to be executed by the individual processors are fixed.

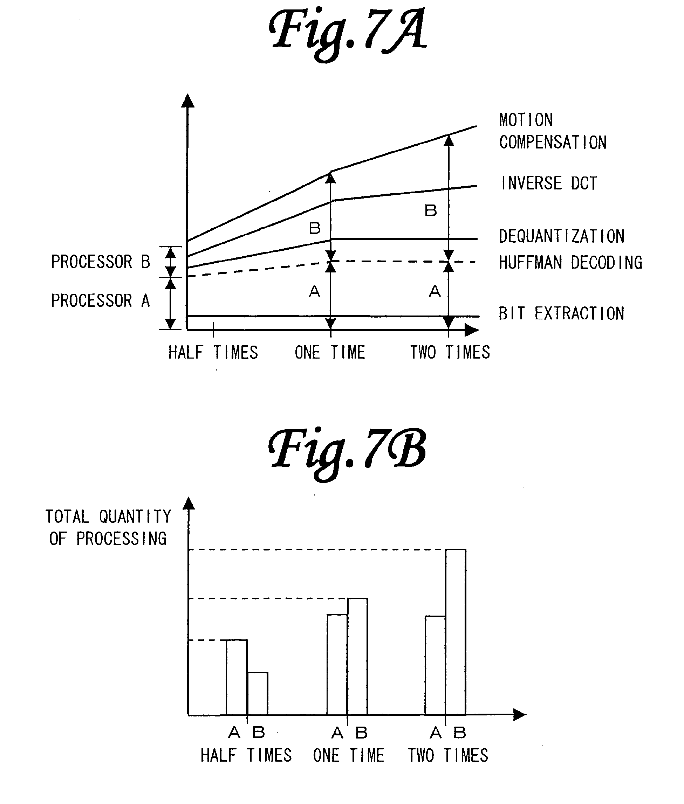

Therefore, more processings are executed by the processor 610 (as shown at A in Fig. 7A) for executing the preceding stage of the decoding processing at the reducing time than those by the processor 611, as shown in Fig. 7A. At the enlarging conversion processing time, more processings are executed by the processor 611 (as shown at A in Fig. 7A) for executing the succeeding stage of the decoding processing. As shown in Fig. 7B, moreover, the balance in the processing load is deteriorated to lower the total processing efficiency. Especially at the reducing time, the processing quantity is synthetically equalized to that of the case at the one-time enlargement.

On the contrary, the decoding processing apparatus thus far described according to the first and second embodiments are so configured that the functional blocks to be executed by their individual blocks are changed according to the enlargement ratio. Independently of the enlargement ratio, therefore, the balance of the processing loads on the individual processors can be satisfactorily kept to keep the total processing efficiency far better. It is, therefore, possible to realize the high speed decoding processing and accordingly to reduce the maximum processing capacity demanded for each processor.

Here, the programs stored in the memories 1301, 1311, 3301 and 3311 may be prepared by writing the programs created using a personal computer or the like, in the individual memories 1301, 1311, 3301 and 3311. Alternatively, the programs created outside may also be stored in a storage medium and fed through the recording medium to the individual memories 1301, 1311, 3301 and 3311.

The storage medium for feeding the programs can be exemplified by flexible disks, hard disks, optical disks, magneto-optical disks, CD-ROM, CD-R, DVD, DVD±R, DVD-RAM, magnetic tape, nonvolatile memory cards and ROM.

## Claims

1. A signal processing apparatus comprising:
a plurality of signal processing circuits; and
a storage circuit stored with the program which causes said plural signal processing circuits to execute a plurality of signal processings including a pixel number conversion processing of image data in an assigned manner and which can select it according to the enlargement ratio of said pixel number conversion processing which of said plural signal processing circuits is caused to execute a partial signal processing of said plural signal processings.

2. A signal processing apparatus according to claim 1,
wherein said partial signal processing is executed for enlarging the image data.

3. A signal processing apparatus according to claim 1,
wherein said plural signal processings are sequentially executed to enlarge the image data.

4. A signal processing apparatus according to claim 1,
wherein said plural signal processing circuits include:
a first signal processing circuit; and
a second signal processing circuit for executing another of said plural signal processings on a signal which is obtained as a result that the signal processing is executed in said first signal processing circuit, and
wherein said program can cause said partial signal processing to be executed in said first signal processing circuit, in case said enlargement ratio is larger than a predetermined value, and in said second signal processing circuit, in case said enlargement ratio is smaller than said predetermined value.

5. A signal processing apparatus according to claim 1,
wherein said plural signal processing circuits include:
a first signal processing circuit; and
a second signal processing circuit for executing another of said plural signal processings on a signal which is obtained as a result that the signal processing was executed in said first signal processing circuit, and
wherein said program can cause: said first signal processing and said second signal processing to be executed
in said first signal processing circuit, in case said enlargement ratio is larger than but not a predetermined value, and
in said second signal processing circuit, in case said enlargement ratio is smaller than but not said predetermined value; and
said first signal processing in said first signal processing circuit and said second signal processing in said second signal processing circuit, in case said enlargement ratio takes a value equal to said predetermined value.

6. A signal processing apparatus according to claim 1,
wherein said plural signal processing circuits include:
a first signal processing circuit; and
a second signal processing circuit for executing another of said plural signal processings on a signal which is obtained as a result that the signal processing was executed in said first signal processing circuit, and
wherein said program can cause: said first signal processing and said second signal processing to be executed
in said first signal processing circuit, in case said enlargement ratio is larger than a predetermined value, and
in said second signal processing circuit, in case said enlargement ratio is smaller than another predetermined value smaller than said predetermined value; and
said first signal processing in said first signal processing circuit and said second signal processing in said second signal processing circuit, in case said enlargement ratio takes a value between said predetermined value and said another predetermined value.

7. A signal processing apparatus according to claim 4,
wherein said partial signal processing is a prediction decoding processing.

8. A signal processing apparatus according to claim 4,
wherein said partial signal processing is a dequantization processing.

9. A signal processing apparatus according to claim 5,
wherein said first signal processing is a prediction decoding processing whereas said second signal processing is a dequantization processing.

10. A signal processing apparatus according to claim 6,
wherein said first signal processing is a prediction decoding processing whereas said second signal processing is a dequantization processing.

11. A signal processing apparatus according to claim 1,
wherein said plural signal processing circuits include:
a first signal processing circuit; and
a second signal processing circuit for executing another of said plural signal processings on a signal which is obtained as a result that the signal processing was executed in said first signal processing circuit, and
wherein said program can select it according to the enlargement ratio of said pixel number conversion processing whether or not the processing for setting the information to restrict a signal to be processed in said second signal processing circuit is to be executed.

12. A signal processing apparatus according to claim 1,
wherein said plural signal processings include a signal processing to be executed on the image data converted into a frequency region signal.

13. A signal processing apparatus comprising:
a first signal processing circuit;
a second signal processing circuit for executing another signal processing on a signal which is obtained as a result that the signal processing was executed in said first signal processing circuit; and
a storage circuit a program which causes said first and second signal processing circuits to execute a plurality of signal processings including an image data pixel number conversion processing,
wherein said program can select it according to the enlargement ratio of said pixel number conversion processing whether or not the processing for setting the information to restrict a signal to be processed in said second signal processing circuit is to be executed.

14. A signal processing method for image data comprising:
the step of setting it according to the enlargement ratio of said pixel number conversion processing which of a plurality of signal processing circuits is used for executing a partial signal processing of a plurality of signal processings including an image data pixel number conversion processing is to be executed by; and
the step of assigning and executing said plural signal processings to and by said plural signal processing circuits,
wherein said partial signal processing is executed by said signal processing circuit set at said setting step.

15. A signal processing method for performing a pixel number conversion processing of image data, comprising:
the step of performing a predetermined signal processing in a first signal processing circuit; and
the step of processing such a signal in a second signal processing circuit as is obtained as a result that a signal processing was executed in said first signal processing circuit,
wherein it is selected according to the enlargement ratio of said pixel number conversion processing whether or not said predetermined signal processing includes a setting processing for setting the information to restrict a signal to be processed in said second signal processing circuit.

16. A program for signal processing image data,
wherein it is configured to cause a plurality of signal processing circuits to execute a plurality of signal processings including a pixel number conversion processing of the image data in an assigned manner, and
wherein it is configured to select which of said plural signal processing circuits is used for executing a partial signal processing of said plural signal processings.

17. A program for performing a pixel number conversion processing of image data,
wherein it is configured to cause a first signal processing circuit to execute a predetermined signal processing, and to cause a second signal processing circuit to process the signal which is obtained as a result that the signal processing was executed in said first signal processing circuit, and
wherein it is configured to select it according to the enlargement ratio of said pixel number conversion processing whether or not said predetermined signal processing includes a setting processing for setting the information to restrict the signal to be processed in said second signal processing circuit.

18. A recording medium stored with the program according to claim 16.

19. A recording medium stored with the program according to claim 17.
